# EUROPEAN PATENT APPLICATION

(11) **EP 3 599 168 A1**
(43) Date of publication of application: **29.01.2020**
(21) Application number: 18185273.2
(22) Date of filing: 24.07.2018
(51) Int. Cl.: B64C 37/02, B64D 5/00, B64C 39/02

(54) **ASSISTED AIRCRAFT TAKE-OFF**

(71) Applicant: ArianeGroup GmbH, 82024 Taufkirchen (DE)
(72) Inventor: Rinze, Andreas, 28199 Bremen (DE)
(74) Representative: Marschall, Stefan

(57) **Abstract**

Disclosed is a take-off assisting device (1) for aircrafts, comprising a connector system (10) for detachably coupling the take-off assisting device to a mating connection component of an aircraft, and at least one engine (20a, 20b) configured to provide thrust both in an coupled state, in which the take-off assisting device is coupled to an aircraft, and in a detached state. The take-off assisting device is constructed as a drone further comprising a steering system (30) and adapted to fly separately in the detached state.

Further disclosed is an aircraft comprising a connection component (140) configured to be releasably combined with a connector system (10) of a take-off assisting device (1).

Moreover, a method of assisting take-off of an aircraft (100) is disclosed.

## Description

The present invention concerns a take-off assisting device for aircrafts, an aircraft adapted to be assisted in its take-off, and a method of assisting take-off of an aircraft.

The thrust necessary for an aircraft to take off depends on various constraints including the shape and construction of the aircraft body, the mass of the (possibly loaded) aircraft and ambient conditions such as the so-called "hot and high" conditions (concerning a geographic elevation and an ambient temperature of the airport) or the length of a runway to be used. As a consequence, aircrafts with a certain load may be able to depart under certain conditions, while they are unable to take off when the conditions are not met.

In the early times of aviation, in particular in the area of military aircraft, booster rockets have been developed to provide thrust in addition to firmly installed engines of an aircraft, so as to support the aircraft in taking off under challenging conditions. This concept is known as "jet assisted take-off" (JATO) or "rocket assisted take-off" (RATO). The rockets involved were usually released after some time; parachutes could be provided to slow down the fall. The rockets then sunk in the sea or were recovered and possibly re-used.

With the development of modern powerful jet engines inducing a significant increase of available thrust, the involvement of JATO/ RATO systems has been mostly abandoned.

As a consequence, modern aircrafts typically comprise jet engines which are constructed to provide both the thrust during take-off and the propulsion during following cruise and descent.

However, with regard to ecological considerations, aircrafts are typically contestable, in particular because of their exhaust emissions, their fuel consumption and the noise they produce.

It is an object of the present invention to provide for a technique that facilitates ecologically improving aircrafts.

The object is solved by a take-off assisting device for aircrafts according to claim 1, an aircraft according to claim 7 and a method according to claim 8. Preferred embodiments are disclosed in the dependent claims, in the description and the figured.

A take-off assisting device according to the present invention is devised to support take-off of an aircraft the device can be detachably coupled to. In particular, the take-off assisting device is preferably adapted to be coupled to various aircrafts one after another, such that the take-off assisting device may be applicable for a series of aircrafts, e.g. for a series of aircrafts taking off from a particular airport or runway. The detachment can preferably be carried out automatically.

To provide for the respective coupling, the take-off assisting device comprises a connector system which is configured to be (detachably) connected to a connection component of a respectively configured aircraft. Such connector system may comprise at least one mechanical element (which may be form-fitting with a respective element of said connection component of the aircraft) and/or at least one electromechanical connection element (such as a solenoid and/or a robot gripper).

The take-off assisting device further comprises at least one engine configured to provide thrust both in an coupled state, i.e., when the take-off assisting device is coupled to an aircraft, and in a detached state, i.e., when the take-off assisting device is uncoupled from any aircraft. Accordingly, in the coupled state, the at least one engine may support propulsion of the coupled aircraft, whereas in the detached state, the at least one engine may propel the separated take-off assisting device such that it can fly separately: To this end, the take-off assisting device is constructed as a drone, i.e. configured to fly without a human pilot, comprising a steering system.

An aircraft according to the present invention comprises a connection component configured to be detachably combined with a connector system of a take-off assisting device according to an embodiment of the present invention. The connection component may comprise a mechanical element and/or an electromechanical component.

A method according to the present invention serves to assist take-off of an aircraft. The method comprises performing a take-off (preferably comprising at least a part of a climb) of the aircraft with at least one take-off assisting device according to an embodiment of the present invention detachably coupled to the aircraft. Therein, the performing comprises operating the at least one engine of the at least one take-off assisting device so as to provide thrust. The method further comprises (preferably automatically) detaching the take-off assisting device from the aircraft and separately flying the detached take-off assisting device to a designated destination. The method may further comprise landing the take-off assisting device.

The present invention thus advantageously provides a technique enabling an aircraft to continue its flight with take-off assisting device(s) being detached once a certain altitude has been reached. As a consequence, firmly installed engines of the aircraft may be designed irrespective of certain limitations resulting from the requirements of take-off. The thus designed firmly installed engines may therefore exhibit improved thermodynamic efficiency and ecological characteristics during the usually long-lasting cruise.

Moreover, the inventive technique allows an aircraft configuration facilitating employment of one or more take-off assisting device(s) only if needed, such as in cases where the load of an aircraft exceeds a certain limit; an aircraft according to the present invention may be thus configured. Thus, the firmly installed engines may be optimised for providing thrust in normal cases (e.g. when the load is below a limit or when the runway has a certain length), but nevertheless, the aircraft may be enabled to handle exceptional cases (e.g. cases of particularly heavy loads or when the runway is extraordinarily short).

Therein, according to the present invention, the take-off assisting device is constructed as a drone, configured to separately fly (and preferably land) after the detachment. As a consequence, the device can be easily and quickly directed to a certain designation, where it may be re-employed so as to support various aircrafts one after the other.

Due to facilitating both said possibility of optimising the firmly installed engines of an aircraft and easy re-use of the take-off assisting device, the present invention thus provides for an ecological improvement of aircraft technique, including reduction of each of fuel waste, exhaust emissions and noise of the aircraft, and further including a material and energy saving provision and re-use of a take-off assisting device.

The steering system may comprise one or more aileron/s and/or one or more thrust vectoring means (such as a rudder for controlling yaw), which may allow navigation of the take-off assisting device to a/the designated destination.

According to a preferred embodiment, an inventive take-off assisting device is adapted to autonomously navigate using a satellite navigation system, ground based radio signals and/or at least one inertial system. Accordingly, such take-off assisting device may be able to determine its route by receiving, via at least one respective receiver that may be comprised by the take-off assisting device, data from the satellite navigation system.

Additionally or alternatively, the take-off assisting device may be configured to autonomously navigate using at least one inertial navigational system it may comprise.

In particular, the take-off assisting device may be configured to autonomously fly to a respective destination, e.g. to return to the airport or other location where its last assisted take-off begun. Correspondingly, according to an advantageous embodiment of an inventive method, the action of separately flying the at least one detached take-off assisting device to a designated destination may be carried out using a satellite navigation system, ground based radio signals and/or at least one inertial system.

Additionally or alternatively, the take-off assisting device may be adapted to be at least partially remotely controlled. Such remote control may concern the at least one engine (e.g., an amount of thrust provided in respective situations), the connector system (e.g., an activation of a detachment of the take-off assisting device from the respective aircraft) and/or the steering system (e.g., an orientation of one or more aileron/s and/or thrust vectoring means the take-off assisting device may comprise).

Analogously, according to advantageous embodiments of an inventive method, the action of operating the at least one engine, the action of detaching the take-off assisting device from the aircraft and/or the action of separately flying the detached at least one take-off assisting device take-off assisting device may comprise remotely controlling the at least one take-off assisting device (in a respective coupled or detached state).

The remote control provides the advantage that it can be steadily used even in an airspace with unreliable satellite reception. Moreover, it may be advantageous in particular in heavily used airspaces such as a space nearby an airport, where the take-up assisting device has to be safely guided among other flying objects and in possibly unexpected situations.

In particular, the take-off assisting device may comprise a communication system facilitating the remote control.

For instance, the communication system may comprise one or more antenna(s) and at least one corresponding data evaluation system to transform signals received via the antenna(s) into corresponding control commands. Such communication system may wirelessly link the take-off assisting device to a ground station. Accordingly, the remote control may be executable from the ground station.

Additionally or alternatively, the communication system may link the take-off assisting device to an aircraft the take-off assisting device may be coupled to or detached from. In this case, the communication link may comprise a wireless link (such as including one or more antenna(s) and a data evaluation system as mentioned above) and/or (in an coupled state) a wired link.

According to an advantageous embodiment of an inventive take-off assisting device, the connector system can comprise an interface for energy exchange and/or for data exchange (respectively with an coupled aircraft).

Analogously, the connection component of an aircraft according to a preferred embodiment of the present invention can comprise at least one interface for energy exchange and/or for data exchange (with a respectively coupled take-off assisting device).

Such interfaces may, in particular, facilitate transmission of control commands from a control unit of the aircraft to the take-off assisting device, e.g. so as to control a thrust provided by the at least one engine of the take-off assisting device, and/or to control the connector system (e.g., to activate a detachment), as mentioned above.

The at least one engine of a take-off assisting device according to the present invention may comprise at least one electromotor and/or at least one combustion motor. In these cases, the take-off assisting device may comprise an energy source (such as at least one battery and/or at least one solar panel) configured to provide electrical energy to the at least one electromotor, and/or at least one dedicated fuel tank configured to provide the at least one combustion motor with fuel, respectively.

Alternatively or additionally, at least one combustion motor and/or at least one electromotor may be detachably connectable to at least one fuel tank and/or at least one electrical energy source (such as a battery and/or a solar panel), respectively, of the aircraft. The connector system of the take-off assisting device may then be configured to provide for a cutting of a connection of the at least one combustion motor and/or electromotor, respectively, to said fuel tank of the aircraft, to detach the take-off assisting device from the respective aircraft; analogously, the detaching step of a method according to an embodiment of the present invention may then comprise cutting said connection. In these cases, the separate flying subsequent to the detachment may be operable/operated using fuel from at least one dedicated fuel tank possibly comprised by the take-off assisting device, and/or using at least one electrical energy source and an electromotor possibly comprised, in addition to said combustion motor, by the take-off assisting device.

Preferably, the take-off assisting device according to the present invention comprises a winged body; such embodiments facilitate the take-off assisting device gliding in its detached state and, therewith, provide for an energy efficient flight. Preferably, the winged body has an aerodynamic shape. In particular, it can be shaped to provide lift to the aircraft (when the take-off assisting device is coupled thereto), thus supporting the aircraft in its take-off, and/or to the take-off assisting device itself in a detached state thereof.

The take-off assisting device may comprise a stabilizer for vertical balancing the take-off assisting device, in particular in a detached state thereof. In embodiments further comprising a winged body, such stabilizer may protrude from the winged body, wherein two respective wings may preferably be arranged symmetrically to each other with respect to the stabilizer. According to a particular example, the connector system is at least partially arranged on a surface of such stabilizer.

The connector system may be configured to ensure that, in a coupled state of the take-off assisting device, a distance between the aircraft and a rotor of the at least one engine of the take-off assisting device is at least d/2 or at least 3d/4 or at least d, wherein d denotes a (mean) rotor diameter of the at least one engine. Such (optional) configuration may be advantageous for example in cases where the engine comprises a combustion motor, since by such distance, thermal strains to the aircraft can be reduced.

The stabilizer may have a tail formed as a pivotable rudder which may form part of the steering system. The rudder may be pivotable about an axis inclined or even orthogonal to a main thrust direction of the at least one engine of the take-off assisting device.

According to advantageous embodiments of the present invention, the take-off assisting device may comprise one or more telescope legs for rising the take-off assisting device to a respective aircraft, thus supporting a coupling (i.e., an attachment) thereto. Such leg/s may be foldable and/or retractable towards a (e.g. winged) body of the take-off assisting device.

Additionally or alternatively, the take-off assisting device may comprise a landing gear, which may be at least partially retractable. The landing gear may comprise one or more wheel/s. In embodiments comprising at least one telescope leg as mentioned above, such wheels may be arranged at a respective end of the telescope leg/s.

The take-off assisting device and/or the aircraft may comprise a sensor system configured to control an approach and/or the coupling of the take-off assisting device to the respective aircraft.

Analogously, a method according to the present invention may comprise rising the take-off assisting device to the aircraft by means of one or more telescope legs, and coupling the take-off assisting device to the aircraft. Additionally or alternatively, the method may comprise approaching the take-off assisting device to the aircraft, e.g. rolling on wheels which in respective embodiments may be arranged at respective ends of the telescope legs. The approach, the rising and/or the coupling may be controlled by means of a sensor system.

According to exemplary embodiments of the present invention, the aircraft is an airplane, in particular, an airliner.

According to a particular example, the at least one firmly installed engine of the aircraft or the firmly installed engines of an aircraft in their entirety may be devised to operate with at least 85% or at least 90% or at least 95% of its/ their maximum power setting (in particular, of its/ their maximum possible fuel injection and/or of a maximum combustion temperature) after the aircraft has reached at least 75%, at least 80% or at least 90% of a designated cruise altitude of the aircraft.

At least one firmly installed engine of the aircraft or the firmly installed engines of the aircraft in their entirety may be optimised (with regard to its/their thermodynamic efficiency, its/their specific fuel consumption [kg fuel per kN thrust] and/or its/their exhaust emissions [kg emission per kN thrust]) disregarding take-off. For instance, the at least one firmly installed engine or the entirety of firmly installed engines may be optimised for cruise flight and/or for one or more manoeuvre(s) such as the so-called "touch and go" or the like. As a consequence, the waste of fuel, exhaust emissions and noise occurring after the climbing may be reduced.

In the following, preferred embodiments of the present invention are explained with respect to the accompanying drawings. As is to be understood, the various elements and components are depicted as examples only, may be facultative and/or combined in a manner different than depicted. Reference signs for related elements are used comprehensively and not defined again for each figure.

Shown is schematically in
Fig. 1: an exemplary embodiment of a take-off assisting device according to the present invention; and in
Fig. 2: a portion of an aircraft according to an embodiment of the present invention with a take-off assisting device coupled thereto.

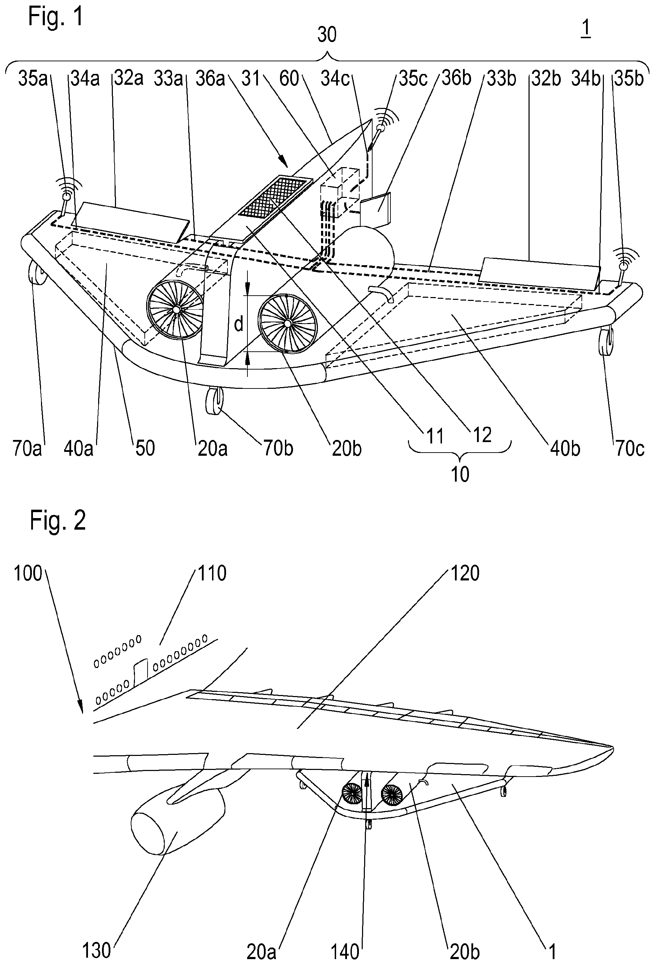

In Figure 1, a take-off assisting device 1 according to an exemplary embodiment of the present invention is depicted. The take-off assisting device 1, which is configured as a drone capable of flying separately from any aircraft (and without any human pilot), comprises a connector system 10 for detachably coupling the take-off assisting device 1 to a mating connection component of an aircraft (not shown in Figure 1).

In the example depicted, the connector system 10 is arranged on a surface of a stabilizer 60 for vertical balancing the take-off assisting device, in particular in a detached state thereof. The connector system comprises a mechanical element 11 and an interface 12 for energy exchange and/or for data exchange.

A mating connection component of an aircraft the take-of assisting device may preferably coupled to may be configured to detachably engage with the mechanical element 11. In particular, the connection component may comprise a robot gripper (not shown) configured to selectively grip or release the mechanical element 11. The exemplary mechanical element 11 shown in Figure 1 is configured as a guide rail having a T-shaped cross section. As is to be understood, a mechanical element of a connector system of an inventive take-off assisting device may have an alternative design than the one depicted. In particular, it may include one or more moveable element(s) such as a robot gripper.

In an coupled state of the take-off assisting device 1, the interface 12 is preferably connected to a respective counter interface element of the connection component of the aircraft (not shown in Figure 1). Energy to be used by the take-off assisting device (e.g. by a steering system 30 further comprised by the take-off assisting device) and/or at least one control command may be transmittable, via the interface 12 of the connector system, from a control unit of the aircraft to the take-off assisting device, e.g. to a computer unit 31 of the steering system 30.

The exemplarily shown take-off assisting device 1 further comprises two engines 20a, 20b configured to provide thrust, thus increasing the aircraft in a coupled state of the take-off assisting device 1, and propelling the separated take-off assisting device 1 in a detached state. In the depicted case, the engines 20a, 20b are configured as combustion engines, and the take-off assisting device 1 further comprises dedicated fuel tanks 40a, 40b configured to provide fuel to the engines 20a, 20b via respective supply systems. The fuel tanks 40a, 40b are arranged within the wings of a winged body 50 of the take-off assisting device 1. The dimension of the stabilizer 60 with the connector system 10 thereon ensures that, in a coupled state of the take-off assisting device 1, a distance between the aircraft (e.g., a wing thereof) and the engines 20a, 20b is at least as big as a (mean) rotor diameter d of the engines. Thereby, thermal strain to the aircraft is reduced.

A steering system 30 of the take-off assisting device 1 further comprises a computer unit 31 connected, via respective control lines 33a, 33b, with ailerons 32a, 32b which may serve to provide for a respectively intended direction of the flying take-off assisting device 1 in a detached state.

Moreover, in the example depicted, two thrust vectoring elements 36a, 36b are arranged at a tail of the stabilizer 60, wherein due to the perspective of the figure, thrust vectoring element 36a, whose presence is indicated by an arrow, is hidden (and also not adumbrated with doshed lines, to increase intellegibility of the figure). The thrust vectoring elements, which may be pivotable and/or controlled by means of the computer unit 31, provide yaw control by thrust vectoring. Such yaw control may be especially advantageous in case of a failure of one of the engines 20a, 20b. Additionally or alternatively, the tail of the vertical stabilizer may be pivotable (not shown) about an axis extending inclined or even orthogonally to the surface areas of the wings 40a, 40b.

The computer unit 31 is further connected, via control lines 34a, 34b, 34c, to respective antennas 35a, 35b, 35c. By means of one or more of the antennas, the computer unit 31 may communicate with a satellite navigation system enabling the take-up assisting device 1 to autonomously navigate in a detached state, i.e., when detached from any aircraft. Additionally or alternatively, the take-off assisting device may be adapted to navigate using at least one inertial navigational system, and/or one or more of the antennas may provide a wireless link to a ground station and/or to an aircraft the take-up assisting device is coupled to or has recently been detached from. By such link, the steering system 30 can be remotely controlled, e.g. so as to navigate the take-up assisting device 1 to a designated direction.

Additionally or alternatively, the connector system 10 may be remotely controllable via one or more of the antennas. For instance, release of a fixation element possibly comprised by the connector system may be activated by a respective signal received via the at least one antenna (and possibly via the computer unit 31 and/or another computer unit).

The take-off assisting device 1 further comprises a landing gear including wheels 70a, 70b, 70c. Further to landing operations, the landing gear may be adapted to approach the take-off assisting device 1 to a respective aircraft. The wheels may be arranged at respective ends of telescope legs (not shown in the figure) which may serve to rise the take-off assisting device 1 to the aircraft in order to couple it thereto by means of the connector system 10. Sensors (not shown) may be provided to control the approach.

In Figure 2, a portion of an exemplary aircraft 100 (being an airliner) according to the present invention and an exemplary take-up assisting device 1 in a coupled state are shown. The take-up assisting device 1 may, in particular, be designed as depicted in more detail in Figure 1. A fuselage 110, a wing 120 and a firmly installed engine 130 of the aircraft 100 are (at least partially) visible in Figure 2. As is to be understood, a second wing (not visible in Figure 2) of the aircraft 100 is preferably symmetrically provided at the other side of the fuselage 110 and likewise comprises a firmly installed engine, and a further take-up assisting device is preferably detachably coupled or couplable to the second wing.

As indicated by an arrow, the wing 120 comprises a connection component 140 at its bottom side; the connection component 140 may comprise at least one mechanical component and/or at least one electromechanical component, which respectively may be configured to engage with a mechanical element of a connector element of a take-up assisting device 1, such as with mechanical element 11 depicted in Figure 1. For example, the connection component 140 may comprise a robot-gripper (not shown) configured to releasably grip said mechanical element.

The connection component 140 may further comprise a separable fuel supply line configured to supply fuel from a tank included in the aircraft 100 (not visible in Figure 2) to the engines 20a, 20b of the take-up assisting device 1.

Additionally or alternatively, the connection component 140 may preferably comprise at least one interface configured to be connected to a respective interface of a connector element of the take-up assisting device 1. As described above, the thus connected interfaces may serve to transfer energy and/or data.

According to the present invention, the take-up assisting device 1 is configured to provide additional thrust to the aircraft 100 during take-up (including at least a part of a climbing process), to thereafter be detached from the aircraft 100 and to separately fly using its steering system.

As a consequence, after detachment, the take-up assisting device 1 may fly to a designated destination. For instance, it may be navigated so as to return to an airport or a runway where the aircraft with the take-up assisting device 1 has lastly taken off. There it may land using the landing gear. Thereafter, the take-off assisting device 1 may be prepared (e.g. refuelled) for re-use and coupled again, to a next aircraft.

Due to the thrust support receivable during take off, the firmly installed engines of the aircraft 100, in particular engine 130 may be optimised, with regard to their thermodynamic efficiency and/or ecological characteristics, for flying conditions at a time when the take-up assisting device (and preferably at least one further take-up assisting device) is detached, which flying conditions usually hold for a long cruise. As a consequence, the waste of fuel, emissions and noise can be reduced.

Disclosed is a take-off assisting device 1 for aircrafts, comprising a connector system 10 for detachably coupling the take-off assisting device to a mating connection component of an aircraft, and at least one engine 20a, 20b configured to provide thrust both in an coupled state, in which the take-off assisting device is coupled to an aircraft, and in a detached state. The take-off assisting device is constructed as a drone further comprising a steering system 30 and adapted to fly separately in the detached state.

Further disclosed are an aircraft comprising a connection component 140 configured to be releasably combined with a connector system 10 of a take-off assisting device 1, and a method of assisting take-off of an aircraft 100.

### Reference signs

- 1: take-off assisting device
- 10: connector system
- 11: mechanical element of connector system
- 12: interface for energy exchange and/or for data exchange

- 20a, 20b: engine of take-off assisting device

- 30: steering system of take-off assisting device
- 31: computer unit of steering system
- 32a, 32b: aileron
- 33a, 33b: control line
- 34a, 34b, 34c: communication line
- 35a, 35b, 35c: antenna
- 36a, 36b: thrust vectoring element

- 40a, 40b: fuel tank

- 50: winged body

- 60: stabilizer

- 70a, 70b, 70c: wheel of landing gear

- 100: aircraft
- 110: fuselage
- 120: wing
- 130: firmly installed engine
- 140: connection component of aircraft 100

- d: mean diameter of a rotor of the engine

## Claims

1. Take-off assisting device (1) for aircrafts, comprising
- a connector system (10) for detachably coupling the take-off assisting device to a connection component of an aircraft; and
- at least one engine (20a, 20b) configured to provide thrust both in an coupled state, in which the take-off assisting device is coupled to an aircraft, and in a detached state;
wherein the take-off assisting device is constructed as a drone comprising a steering system (30) and adapted to fly separately in the detached state.

2. Take-off assisting device according to claim 1, which is adapted to autonomously navigate using a satellite navigation system, ground based radio signals and/or at least one inertial navigational system.

3. Take-off assisting device according to one of claims 1 or 2, which is adapted to be at least partially remotely controlled.

4. Take-off assisting device according to one of the preceding claims, wherein the connector system comprises an interface (12) for energy exchange and/or data exchange.

5. Take-off assisting device according to one of the preceding claims, further comprising a winged body (50).

6. Take-off assisting device according to one of the preceding claims, further comprising
- at least one telescope leg for rising the take-off assisting device to a respective aircraft and/or
- a landing gear and/or
- a sensor system for controlling an approach of the take-off assisting device to the/a respective aircraft.

7. Aircraft (100) comprising a connection component (140) configured to be releasably combined with a connector system (10) of a take-off assisting device (1) according to one of the preceding claims.

8. Method of assisting take-off of an aircraft (100), the method comprising
- performing a take-off of the aircraft with at least one take-off assisting device (1) according to one of claims 1 to 6 releasably coupled to the aircraft, wherein the performing comprises operating the at least one engine (20a, 20b) of the at least one take-off assisting device so as to provide thrust;
- detaching the take-off assisting device (1) from the aircraft (100); and
- separately flying the detached at least one take-off assisting device (1) to a designated destination.

9. Method according to claim 8, wherein operating the at least one engine (20a, 20b) comprises remotely controlling the at least one engine in a coupled state and/or in a detached state of the at least one take-off assisting device (1).

10. Method according to one of claims 8 or 9, wherein separately flying the detached at least one take-off assisting device take-off assisting device comprises remotely controlling the steering system (30) of the at least one take-off assisting device (1).

11. Method according to one of claims 8 to 10, wherein the detaching is activated using a data exchange interface (12) of the connector system (10) and/or using a communication link of the take-off assisting device (1) to the aircraft and/or to at least one ground station.

12. Method according to one of claims 8 to 11, further comprising
- approaching, supported by a sensor system, the take-off assisting device to the aircraft (100); and/or
- rising the take-off assisting device to the aircraft (100) by means of one or more telescope legs.
